# FASCICULE DE BREVET EUROPEEN

(11) **EP 4 136 326 B1**
(45) Date de publication et mention de la délivrance du brevet: **04.06.2025**
(21) Numéro de dépôt: 21726438.1
(22) Date de dépôt: 12.04.2021
(51) Int. Cl.: F01D 9/04, F01D 11/00, F01D 11/08, F01D 11/12, F01D 25/24, F04D 29/52

(54) **TURBINE AVEC ANNEAU D'ÉTANCHÉITÉ POUR UNE TURBOMACHINE**
TURBOMASCHINEN-TURBINE MIT DICHTRING
TURBOMACHINE TURBINE WITH SEALING RING

(30) Priorité: 15.04.2020 FR 2003785
(43) Date de publication de la demande: 22.02.2023
(73) Titulaire: SAFRAN AIRCRAFT ENGINES, 75015 Paris (FR)
(72) Inventeur: MORLIERE, Simon, Nicolas, 77550 MOISSY-CRAMAYEL (FR); BEAUQUIN, Nicolas, Jean-Marc, Marcel, 77550 MOISSY-CRAMAYEL (FR); BOIS, Stéphane, Sylvain, 77550 MOISSY-CRAMAYEL (FR); BOURGEOIS, Sébastien, Philippe, Edith, 77550 MOISSY-CRAMAYEL (FR)
(74) Mandataire: Ernest Gutmann - Yves Plasseraud S.A.S.
(86) Numéro de dépôt international: PCT/FR2021/050639
(87) Numéro de publication internationale: WO 2021/209707

(56) Documents cités:
- EP-A1- 2 060 743
- EP-A1- 2 060 751
- EP-A1- 3 124 750
- EP-A1- 3 502 425
- WO-A1-2015/112662
- DE-A1- 102006 044 147
- FR-A1- 2 899 273
- FR-A1- 2 978 197

## Description

### Domaine technique de l'invention

L'invention concerne une turbine pour une turbomachine, telle qu'un turboréacteur ou un turbopropulseur d'avion.

### Etat de la technique antérieure

Une turbomachine comporte classiquement, de l'amont vers l'aval dans le sens de circulation des gaz au sein de la turbomachine, une soufflante, un compresseur basse pression, un compresseur haute pression, une chambre de combustion, une turbine haute pression, une turbine basse pression et une tuyère d'échappement des gaz.

Une turbine basse pression 1 de turbomachine de l'art antérieur, comme par exemple selon le document FR 2 899 273, est illustrée aux figures 1 et 2. Celle-ci comporte quatre étages comprenant chacun un distributeur 2 formé d'une rangée annulaire de pales 3 fixes portées par un carter externe 4 de la turbine 1, et une roue aubagée 5 située en aval du distributeur 2.

Les roues 5 comportent des disques 6 assemblés axialement les uns aux autres par des brides annulaires 7 et portant des aubes radiales 8. Ces roues 5 sont reliées à un arbre de turbine non représenté, par l'intermédiaire d'un cône d'entraînement 9 fixé sur les brides annulaires 7 des disques 6.

Les termes axial, radial et circonférentiels sont définis par rapport à l'axe de la turbomachine, qui est confondu avec l'axe de la turbine basse pression 1.

Chaque roue 5 est entourée extérieurement avec un faible jeu par un anneau d'étanchéité 10 en matériau abradable. L'anneau 10 est formé par des secteurs fixés circonférentiellement sur le carter 4 de la turbine 1 par l'intermédiaire d'organes de verrouillage 12. Chaque secteur comporte un support radialement externe 13 et un bloc de matériau abradable 14, radialement interne et fixé au support 13.

Les distributeurs 2 comprennent des viroles radialement interne 15 et externe 16 qui délimitent entre elles la veine annulaire 17 d'écoulement des gaz dans la turbine 1 et entre lesquelles s'étendent les pales 3.

Le support 13 comporte une patte amont 18 engagée dans une gorge 19 d'un rail amont 20 du carter 4. La patte 18 est maintenue en position dans la gorge 19 à l'aide d'un organe de verrouillage 12 en forme générale de C. L'organe de verrouillage 12 est maintenu axialement par un rebord aval 21 de la virole externe 16 du distributeur 2 situé directement en amont.

Ce rebord aval 21 comporte une partie axiale 22 engagée dans une gorge 23 formée par un rail 24 du carter 11. Un organe d'étanchéité élastique 25 est par ailleurs monté entre le carter 4 et ledit rebord aval 21, ledit organe tendant à repousser ledit rebord 21 vers l'aval, en appui sur l'organe de verrouillage 12.

L'extrémité aval du support 13 est maintenue en appui un rail aval 26 du carter 4, par l'intermédiaire du distributeur 2 situé en aval.

Les aubes 8 du rotor comportent une plate-forme radialement externe 27 à partir de laquelle s'étendent des léchettes 28 coopérant avec le bloc de matériau abradable 14 de façon à former un joint d'étanchéité dynamique.

Afin d'améliorer les performances de la turbomachine, il convient de limiter les débits de fuite dans les zones situées entre l'anneau d'étanchéité 10, le carter 4 et les distributeurs 2 amont et aval. Pour cela, une tôle annulaire d'étanchéité amont 29 est montée sur le support 13 de l'anneau d'étanchéité 10 et s'étendent vers l'amont dans le jeu formé entre l'extrémité amont de l'anneau d'étanchéité 10 et le rebord aval 21.

Par ailleurs, une tôle annulaire d'étanchéité aval 30 est montée entre l'extrémité aval du support 13 et le rail aval 26 du carter 4, ladite tôle aval 30 s'étendant vers l'amont entre le support 13 et le carter 4, de façon à s'étendre dans l'espace annulaire formé entre ces éléments.

Les tôles 29, 30 sont formées de secteurs angulaires mis circonférentiellement bout-à-bout de manière à former une étanchéité sur toute la circonférence. Il n'existe cependant pas de chevauchement entre les extrémités circonférentielles des tôles 29, 30, de sorte qu'un débit de fuite apparaît en fonctionnement entre les différents secteurs des tôles 29, 30.

Il est nécessaire d'assurer une bonne étanchéité au niveau de ces tôles 29, 30.

Il a par ailleurs été constaté que le distributeur 2 situé en amont subit des contraintes thermomécaniques importantes. De telles contraintes sont notamment dues aux différences de température entre la zone radialement interne de la virole externe 16 du distributeur 2 et l'extrémité radialement externe du rebord aval 21. De telles contraintes affectent non seulement la virole externe 16 mais également la pale 3. Il est également souhaité maintenir en position de façon fiable les organes de verrouillage 12 afin d'améliorer l'étanchéité à l'interface entre le distributeur 2, le carter 4 et l'anneau d'étanchéité 10.

Les documents EP 3 124 750 A1 et EP 3 502 425 A1 divulguent chacun une turbine pour turbomachine de l'art antérieur.

### Présentation de l'invention

L'invention vise à remédier aux inconvénients précités de manière simple, fiable et peu onéreuse.

A cet effet, l'invention concerne une turbine pour une turbomachine selon la revendication

Les termes axial, radial et circonférentiel sont définis par rapport à l'axe de la turbine, qui est confondu avec l'axe de la turbomachine.

Les deux joints d'étanchéité assurent ainsi également la fonction de maintien des moyens de verrouillage.

Grâce aux joints d'étanchéité élastiques, les moyens de verrouillage sont maintenus en position, ce qui assure une étanchéité améliorée.

Les deux joints d'étanchéité peuvent comporter au moins un joint annulaire, déformable axialement.

L'utilisation d'un joint déformable, en particulier déformable élastiquement, permet d'autoriser un léger déplacement axial des éléments entre eux. Un tel joint déformable peut également assurer une fonction de rappel élastique et peut exercer un effort axial.

Les moyens de verrouillage comportent une partie radialement externe de section en forme générale de C et une partie radiale s'étendant radialement vers l'intérieur depuis la partie externe, les deux joints élastiques prenant appui sur ladite partie radiale, respectivement de part et d'autre de la partie radiale.

L'anneau d'étanchéité peut comporter une partie s'étendant axialement vers l'amont, située au moins en partie en regard axialement des moyens de verrouillage et/ou des moyens d'étanchéité.

Ladite partie s'étendant axialement peut s'étendre axialement en amont des moyens de verrouillage et/ou des moyens d'étanchéité.

L'anneau d'étanchéité peut être sectorisé et peut comporter une pluralité de secteurs agencés bout à bout sur la circonférence, des éléments d'étanchéité s'étendant entre les extrémités des secteurs d'anneau circonférentiellement adjacents.

Les éléments d'étanchéité peuvent être formés par des languettes ou clinquants.

Les éléments d'étanchéité peuvent être situés au moins dans ladite partie de l'anneau d'étanchéité s'étendant axialement vers l'amont.

Les éléments d'étanchéité permettent ainsi d'améliorer la protection thermique des moyens d'étanchéité et des moyens de verrouillage, en évitant que ceux-ci soient soumis à des débits de gaz chauds issus de la veine d'écoulement des gaz.

Le distributeur peut comporter une virole radialement externe et une virole radialement interne, reliées par des pales radiales, la virole externe comportant au moins un rebord aval s'étendant radialement vers l'extérieur depuis la virole externe et monté sur le carter, ledit rebord s'étendant axialement, au moins en partie, en regard des moyens de verrouillage.

Le distributeur peut comporter une virole radialement externe et une virole radialement interne reliées par des pales radiales, la virole externe comportant au moins un rebord aval s'étendant radialement vers l'extérieur depuis la virole externe et monté sur le carter, l'extrémité radialement externe dudit rebord aval étant située radialement à l'intérieur des moyens de verrouillage.

De cette manière, il est possible de réduire la dimension radiale du rebord, ce qui a pour effet de limiter les contraintes thermomécaniques appliquées au distributeur en fonctionnement, dues notamment aux effets de gradient ou de différences de température. L'anneau d'étanchéité peut comporter une patte maintenue en appui radial et en appui axial sur une partie du carter, par l'intermédiaire des moyens de verrouillage.

Ladite patte sert ainsi à former une butée radiale et une butée axiale, le positionnement de la patte par rapport au carter étant assuré par les moyens de verrouillage.

La turbine selon l'invention peut comporter l'une ou plusieurs des caractéristiques suivantes, prises isolément ou en combinaison, pour autant que les combinaisons de caractéristiques soient techniquement compatibles :
- Les joints d'étanchéité sont annulaires et continus, de façon à assurer une étanchéité sur toute la circonférence, à l'inverse des moyens d'étanchéité discontinus, car sectorisés et sans recouvrement circonférentiel, de l'art antérieur,
- Les joints d'étanchéité sont situés, au moins partiellement, radialement à l'intérieur des moyens de verrouillage, de façon à protéger les moyens de verrouillage du fait de leur position radialement interne vis-à-vis desdits moyens de verrouillage. En particulier, les joints d'étanchéité permettent de limiter l'échauffement des moyens de verrouillage par un débit de fuite de gaz chaud issus de la veine d'écoulement des gaz provenant de la chambre de combustion et traversant la turbine.
- Le distributeur est sectorisé,
- La virole externe du distributeur comporte un rebord amont et un rebord aval s'étendant chacun radialement vers l'extérieur depuis la virole externe,
- La surface radialement interne de la virole externe est tronconique et s'évase vers l'aval. Cette surface est destinée à délimiter la veine d'écoulement de gaz au sein de la turbine.
- Le rebord amont est monté sur un rail du carter,
- Le rebord aval est monté sur un rail du carter
- Le carter comporte une paroi tronconique, chaque rail s'étendant radialement à l'intérieur de ladite paroi tronconique,
- Chaque rail s'étend vers l'aval depuis ladite paroi tronconique,
- L'extrémité radialement externe du rebord amont est en appui radial sur un rail amont du carter,
- Une partie du rebord aval, par exemple l'extrémité radialement externe, est en appui radial sur un rail aval du carter,
- Le rebord aval comporte une partie axiale s'étendant vers l'amont depuis une partie radiale dudit rebord aval, ladite partie axiale étant engagée par complémentarité de forme dans une gorge ménagée dans le carter,
- Les appuis radiaux des rebords et des rails sont formés par des surfaces cylindriques,
- Le carter comporte une partie amont et une partie aval fixées l'une à l'autre,
- La partie amont du carter entoure le distributeur,
- La partie aval du carter entoure l'anneau d'étanchéité et la roue aubagée,
- La partie amont et la partie aval sont fixées l'une à l'autre au niveau de brides radiales desdites parties,
- Le carter comporte un rail amont servant au montage d'une patte amont de l'anneau d'étanchéité,
- Le carter comporte un rail aval servant au montage d'une zone aval de l'anneau d'étanchéité,
- Le rail amont servant au montage de l'anneau d'étanchéité s'étend axialement vers l'amont,
- L'anneau d'étanchéité comporte une patte amont comprenant une surface cylindrique en appui sur une surface cylindrique radialement interne du rail amont correspondant et une surface radiale en appui sur une surface radiale amont du rail amont correspondant,
- La zone aval de l'anneau d'étanchéité comporte une surface cylindrique en appui sur une surface cylindrique complémentaire du rail aval correspondant,
- L'anneau d'étanchéité comporte un support radialement externe et un bloc de matériau abradable radialement interne, fixé sur le support,
- Les éléments d'étanchéité sont engagés dans des fentes ménagées au niveau des extrémités circonférentielles des secteurs de l'anneau d'étanchéité.
- Les éléments d'étanchéité s'étendent sur la majeure partie de la dimension axiale des secteurs, par exemple sur au moins 50%, de préférence au moins 80% de ladite dimension axiale,
- L'anneau d'étanchéité comporte une surface radialement interne comportant au moins une zone cylindrique amont et une zone cylindrique aval, le diamètre de la zone amont étant inférieur au diamètre de la zone aval,
- Chaque aube de la roue aubagée comporte une plate-forme externe à partir de laquelle au moins une léchette amont et une léchette aval s'étendent radialement vers l'extérieur,
- La plate-forme externe est tronconique et s'évase vers l'aval,
- La léchette amont coopère avec la zone cylindrique amont de l'anneau d'étanchéité, la léchette aval coopérant avec la zone cylindrique aval,
- La turbine comporte au moins un organe de verrouillage, par exemple plusieurs organes de verrouillage régulièrement répartis sur la circonférence, chaque organe de verrouillage comportant une zone de verrouillage en forme générale de C,
- La zone de verrouillage comporte une branche axiale radialement externe et une branche axiale radialement interne, reliée par une base radiale,
- La branche radialement externe et en appui radial sur la surface radialement externe du rail amont correspondant du carter,
- La branche radialement interne est en appui sur une patte amont de l'anneau d'étanchéité,
- Les branches interne et externe permettent de maintenir en appui radial la patte sur le rail amont correspondant,
- La base est en appui sur l'extrémité amont de la patte, de manière à plaquer ladite extrémité amont de la patte sur l'extrémité amont du rail amont correspondant du carter,
- La patte comporte une partie s'étendant axialement s'étendant vers l'amont depuis une zone principale de l'anneau d'étanchéité, ladite partie axiale venant en appui radial sur le rail amont correspondant du carter,
- La patte comporte une partie s'étendant radialement vers l'extérieur depuis l'extrémité amont de ladite partie radiale de la patte,
- Ladite partie radiale est apte à venir en appui sur l'extrémité amont du rail amont du carter,
- L'organe de verrouillage comporte une zone de positionnement ou de centrage s'étendant radialement vers l'intérieur depuis la zone de verrouillage. Les moyens de verrouillage désignent uniquement la zone de verrouillage et non pas la zone de positionnement de centrage.
- La zone de verrouillage et la zone de positionnement sont formées d'une seule pièce ou, au contraire, d'au moins deux pièces fixées l'une à l'autre,
- La zone de positionnement peut comporter une partie s'étendant radialement vers l'intérieur depuis la zone de verrouillage et une partie cylindrique s'étendant axialement de part et d'autre de l'extrémité radialement interne de ladite partie radiale,
- Un premier joint d'étanchéité annulaire s'étend axialement entre une face radiale du rebord aval du distributeur et la zone de positionnement,
- Un second joint d'étanchéité annulaire s'étend axialement entre la zone de positionnement et une face radiale de l'anneau d'étanchéité,
- Le premier joint annulaire et/ou le second organe annulaire sont déformables élastiquement dans la direction axiale,
- Le premier joint annulaire et/ou le second organe annulaire ont une section en forme générale d'oméga ou de W.
- Les premier et second joint d'étanchéité appartiennent aux moyens d'étanchéité,
- Le premier joint d'étanchéité et le second joint d'étanchéité sont situés dans un même plan radial,
- Une tôle d'étanchéité est montée entre la périphérie externe de l'anneau d'étanchéité et le carter,
- La tôle d'étanchéité comporte une extrémité amont fixée en périphérie externe de l'anneau d'étanchéité et une extrémité aval montée radialement entre l'anneau d'étanchéité et le rail aval correspondant du carter.

### Brève description des figures

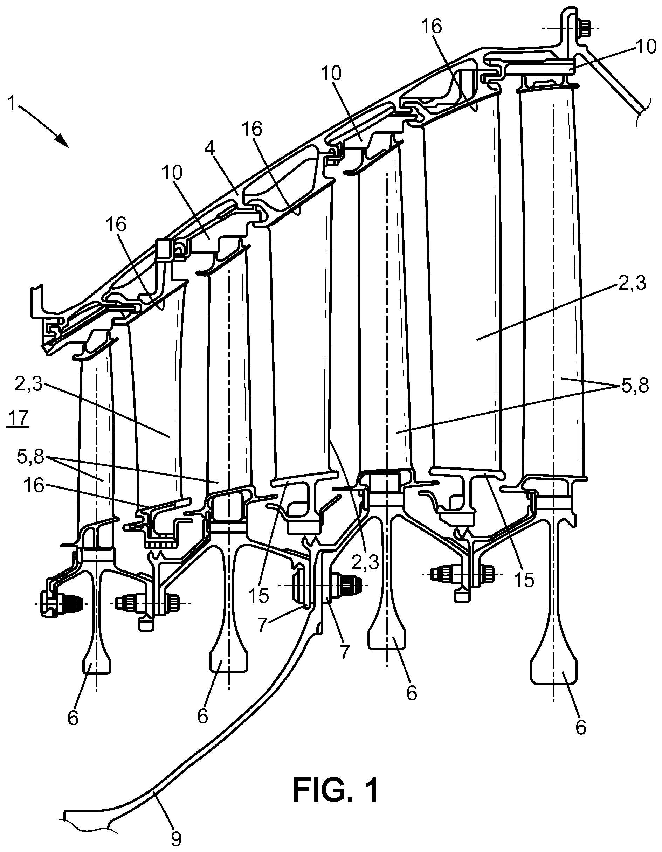

[Fig. 1] est une demie vue en coupe axiale d'une turbine de turbomachine,

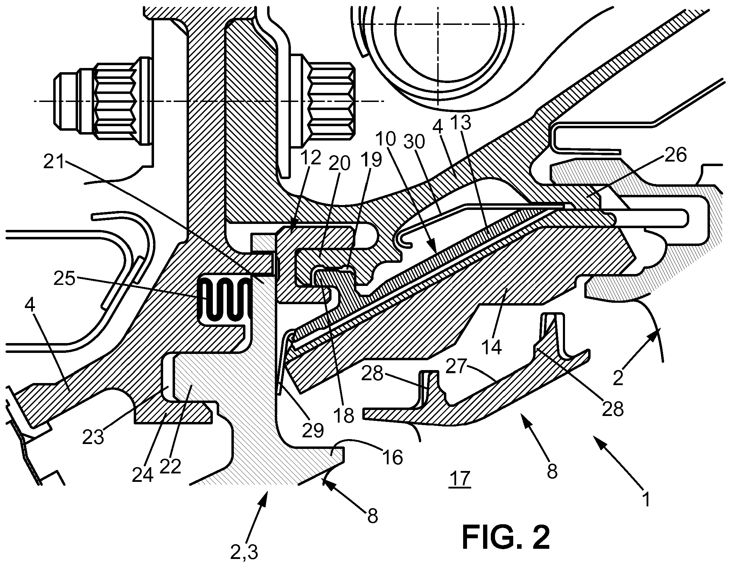

[Fig. 2] est une vue en coupe d'une partie de la turbine de l'art antérieur,
[Fig. 3] est une vue en coupe d'une partie de la turbine selon une première forme de réalisation de l'invention,
[Fig. 4] est une vue en coupe d'une partie de la turbine selon une deuxième forme de réalisation, n'entrant pas dans le champ d'application des revendications et ne faisant pas partie de l'invention,
[Fig. 5] est une vue en coupe d'une partie de la turbine selon une troisième forme de réalisation, n'entrant pas dans le champ d'application des revendications et ne faisant pas partie de l'invention.

### Description détaillée de l'invention

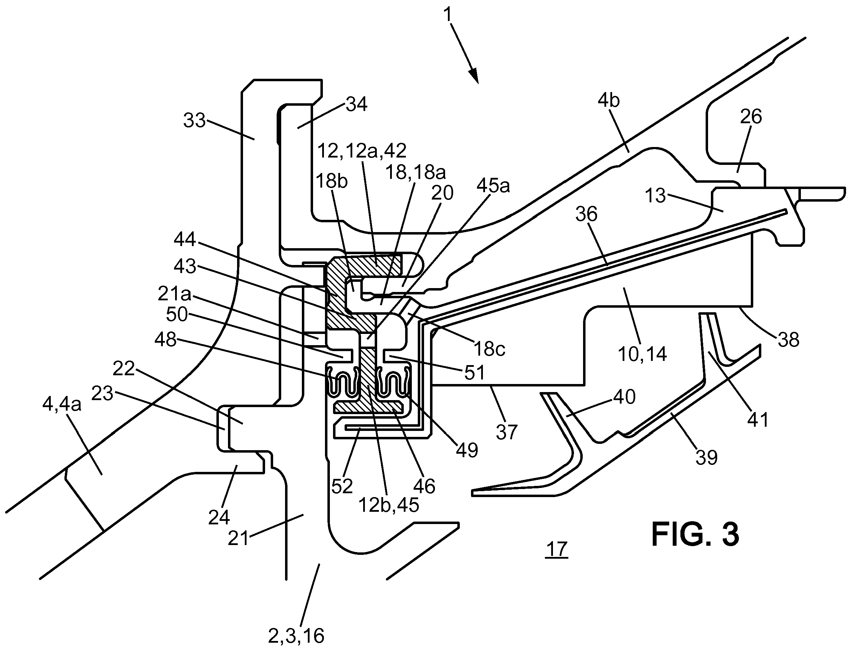

La figure 3 illustre une partie d'une turbine 1 selon une première forme de réalisation de l'invention. Celle-ci comporte un carter 4 annulaire et au moins un étage de turbine comprenant un distributeur 2 et une roue aubagée 5 de rotor entourée d'un anneau d'étanchéité 10, la roue aubagée 5 et l'anneau 10 étant situés en aval du distributeur 2.

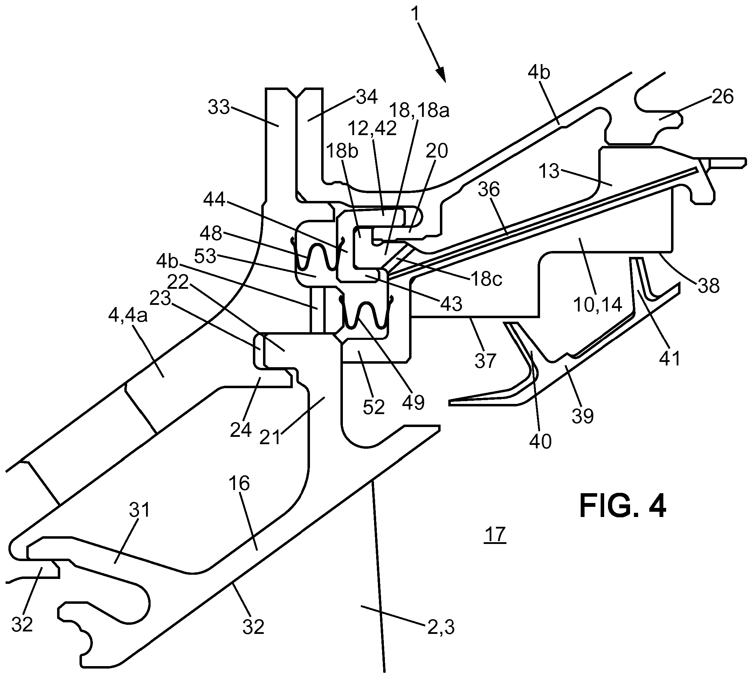

Le distributeur 2 est sectorisé. La virole externe 16 du distributeur 2 comporte un rebord amont 31 (visible à la figure 4) et un rebord aval 21 s'étendant chacun radialement vers l'extérieur depuis la virole externe 16.

La surface radialement interne 32 de la virole externe 16 est tronconique et s'évase vers l'aval. Cette surface 32 est destinée à délimiter la veine 17 d'écoulement de gaz au sein de la turbine 1.

Le rebord amont 31 est monté sur un rail amont 32 du carter 4. De même, le rebord aval 21 est monté sur un rail aval 24 du carter 4.

Le carter 4 comporte deux parties, respectivement amont 4a et aval 4b, comprenant chacun une paroi tronconique et une bride de fixation 33, 34.

La partie amont 4a du carter 4 entoure le distributeur 2. La partie aval 4b du carter 4 entoure l'anneau d'étanchéité 10 et la roue aubagée 5.

L'extrémité radialement externe du rebord amont 31 est en appui radial sur une surface cylindrique radialement externe du rail amont 32 de la première partie 4a.

Une partie du rebord aval 21, par exemple l'extrémité radialement externe 22, est en appui radial sur un rail aval 24 du carter 4. En particulier, le rebord aval 21 comporte une partie axiale 22 s'étendant vers l'amont depuis une partie radiale dudit rebord aval 21, ladite partie axiale 22 étant engagée par complémentarité de forme dans une gorge 23 ménagée dans le carter 4 et formant le rail aval 24.

La seconde partie 4b du carter 4 comporte un rail amont 20 servant au montage d'une patte amont 18 de l'anneau d'étanchéité 10. La partie 4b du carter 4 comporte en outre un rail aval 26 servant au montage d'une zone aval de l'anneau d'étanchéité 10.

Le rail amont 20 s'étend axialement vers l'amont. La zone aval de l'anneau d'étanchéité 10 comporte une surface cylindrique en appui sur une surface cylindrique complémentaire du rail aval 26.

L'anneau d'étanchéité 10 comporte un support radialement externe 13 et un bloc de matériau abradable 14 radialement interne, fixé sur le support 13.

L'anneau d'étanchéité 10 est sectorisé. Des éléments d'étanchéité 36, par exemple des languettes ou des clinquants, sont engagés dans des fentes ménagées au niveau des extrémités circonférentielles des secteurs de l'anneau d'étanchéité 10.

Les éléments d'étanchéité 36 s'étendent sur la majeure partie de la dimension axiale des secteurs, par exemple sur au moins 50%, de préférence au moins 80% de ladite dimension axiale.

L'anneau d'étanchéité 10 comporte une surface radialement interne comportant au moins une zone cylindrique amont 37 et une zone cylindrique aval 38, le diamètre de la zone amont 37 étant inférieur au diamètre de la zone aval 38.

Chaque aube 8 de la roue aubagée 5 comporte une plate-forme externe 39 à partir de laquelle au moins une léchette amont 40 et une léchette aval 41 s'étendent radialement vers l'extérieur. La plate-forme externe 39 est tronconique et s'évase vers l'aval. La léchette amont 40 coopère avec la zone cylindrique amont 37 de l'anneau d'étanchéité 10, la léchette aval 41 coopérant avec la zone cylindrique aval 38.

La turbine 1 comporte au moins un organe de verrouillage 12, par exemple plusieurs organes de verrouillage 12 régulièrement répartis sur la circonférence, chaque organe de verrouillage 12 comportant une zone de verrouillage 12a en forme générale de C.

La zone de verrouillage 12a comporte une branche axiale 42 radialement externe et une branche axiale 43 radialement interne, reliées par une base radiale 44. La branche radialement externe 42 est en appui radial sur la surface radialement externe du rail amont 20 correspondant du carter 4. La branche radialement interne 43 est en appui sur la patte amont 18 de l'anneau d'étanchéité 10. Les branches interne 43 et externe 42 permettent de maintenir en appui radial la patte 18 sur le rail amont 20 correspondant. La base 44 est en appui sur l'extrémité amont 18 de la patte, de manière à plaquer ladite extrémité amont de la patte 18 sur l'extrémité amont du rail amont 20 correspondant du carter 4.

La patte 18 de l'anneau d'étanchéité 10 comporte une partie 18a s'étendant axialement vers l'amont depuis une partie principale de l'anneau d'étanchéité 10, ladite partie axiale 18a venant en appui radial sur le rail amont correspondant 20 du carter 4. La patte 18 comporte en outre une partie 18b s'étendant radialement vers l'extérieur depuis l'extrémité amont de ladite partie radiale 18a de la patte 18. Ladite partie radiale 18b est apte à venir en appui sur l'extrémité amont du rail amont 20 du carter 4.

L'organe de verrouillage 12 comporte une zone de positionnement ou de centrage 12b s'étendant radialement vers l'intérieur depuis la zone de verrouillage 12a.

La zone de verrouillage 12a et la zone de positionnement 12b sont formées d'une seule pièce ou, au contraire, d'au moins deux pièces fixées l'une à l'autre. La zone de positionnement 12b comporte une partie 45 s'étendant radialement vers l'intérieur depuis la zone de verrouillage 12a et une partie cylindrique 46 s'étendant axialement de part et d'autre de l'extrémité radialement interne de ladite partie radiale 45.

Un premier joint d'étanchéité annulaire 48 s'étend axialement entre une face radiale du rebord aval 21 du distributeur 2 et la zone de positionnement 12b. Un second joint d'étanchéité annulaire 49 s'étend axialement entre la zone de positionnement 12b et une face radiale de l'anneau d'étanchéité 10. Le premier joint annulaire 48 et/ou le second joint annulaire 49 sont déformables élastiquement dans la direction axiale. Le premier joint annulaire 48 et/ou le second joint annulaire 49 ont une section en forme générale d'oméga ou de W.

Un rebord annulaire 50 s'étend axialement vers l'aval depuis le rebord aval 21 du distributeur 2. Un rebord annulaire 51 s'étend axialement vers l'aval depuis l'anneau d'étanchéité 10. Les rebords 50, 51 sont situés radialement à l'extérieur des joints d'étanchéité 48, 49.

L'anneau d'étanchéité 10 comporte une partie 52 s'étendant axialement vers l'amont, située au moins en partie en regard des joints d'étanchéité 48, 49 et de l'organe de verrouillage 12. Les éléments d'étanchéité 36 s'étendent également dans la partie axiale 52.

On notera que des orifices ou perçages 21a, 45a et 18csont formés respectivement dans le rebord aval 21, la partie radiale 45 et la patte amont 18, ces orifices ou perçages permettant le passage d'un flux d'air de refroidissement ou de ventilation.

Les joints d'étanchéité 48, 49 et les éléments d'étanchéité 36 assurent une étanchéité sur toute la circonférence, à l'inverse des moyens d'étanchéité discontinus, car sectorisés et sans recouvrement circonférentiel, de l'art antérieur. Ces joints et éléments d'étanchéité 48, 49, 36 permettent également de protéger les moyens de verrouillage 12a du fait de leur position radialement interne vis-à-vis desdits moyens de verrouillage 12a. En particulier, ils permettent de limiter l'échauffement des moyens de verrouillage 12a par un débit de fuite de gaz chaud issus de la veine 17 d'écoulement des gaz provenant de la chambre de combustion et traversant la turbine 1.

Par ailleurs une telle structure est adaptée à un montage des éléments précités de la turbine 1 par l'amont.

La figure 4 illustre une deuxième forme de réalisation, n'entrant pas dans le champ d'application des revendications et ne faisant pas partie de l'invention, qui diffère de celle décrite précédemment en référence à la figure 3 par les caractéristiques décrites ci-après.

Dans cette forme de réalisation l'organe de verrouillage 12 comporte uniquement une zone de verrouillage 12a de forme en C.

Un premier organe d'étanchéité annulaire 48 s'étend axialement entre la base 44 de l'organe de verrouillage 12 et une face radiale du carter 4. Un second organe d'étanchéité annulaire 49 s'étend axialement entre une face radiale de l'anneau d'étanchéité 10 et une face radiale du carter 4. Le premier organe d'étanchéité 48 est logé dans une gorge 53 du carter 4. Le premier organe d'étanchéité 48 et le second organe d'étanchéité 49 sont décalés axialement l'un par rapport à l'autre.

L'extrémité radialement externe du rebord aval 21 du distributeur 2, formée par la partie axiale 22, est située radialement à l'intérieur du premier organe d'étanchéité 48, du second organe d'étanchéité 49 et de l'organe de verrouillage 12. Certaines parties peuvent être festonnées, c'est-à-dire comporter des zones en creux, afin de faciliter le passage de l'air. Des orifices ou perçages 4b et 18c font formés respectivement dans le carter et la patte amont 18, ces orifices ou perçages permettant le passage d'un flux d'air de refroidissement ou de ventilation.

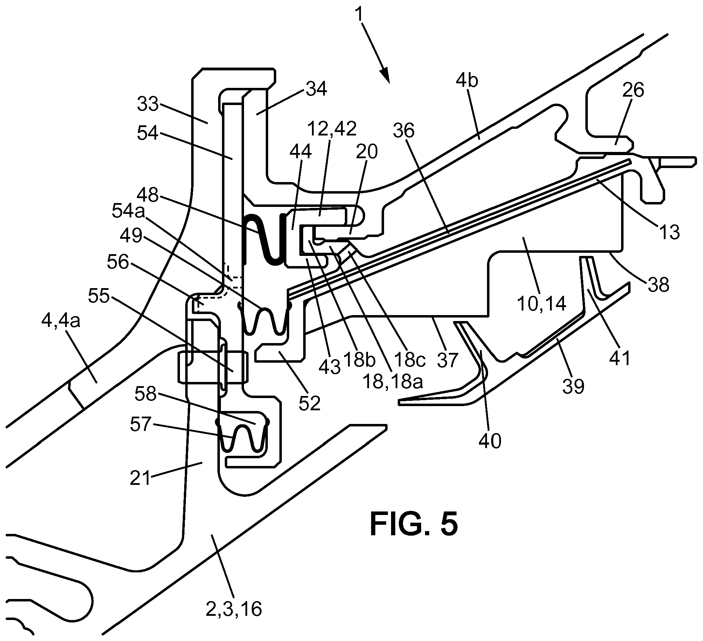

La figure 5 illustre une troisième forme de réalisation, n'entrant pas dans le champ d'application des revendications et ne faisant pas partie de l'invention, qui diffère de celles décrites précédemment en référence aux figures 3 et 4 en ce qu'un élément intermédiaire 54 est monté sur le carter 4 en aval du rebord aval 21 du distributeur 2. L'élément intermédiaire 54 est positionné par rapport au rebord aval 21 par l'intermédiaire d'au moins un plot de positionnement ou de centrage 55. Ledit élément intermédiaire 54 s'étend radialement. La périphérie radialement externe de l'élément intermédiaire 54 est fixée entre la bride radiale 33 de la première partie 4a du carter 4 et la bride radiale 34 de la seconde partie 4b du carter 4.

L'élément intermédiaire 54 comporte un rebord axial 56 s'étendant vers l'amont, en appui radial sur une surface cylindrique du carter 4.

Un organe d'étanchéité annulaire 57 est monté entre le rebord aval 21 et l'élément intermédiaire 54. Ledit organe d'étanchéité 57 est monté dans une gorge 58 de l'élément intermédiaire 54. Le premier organe d'étanchéité 48 et le second organe d'étanchéité 49 sont situés dans un même plan radial. Il est possible de mettre en place une gorge sur l'élément intermédiaire 54 si l'on souhaite utiliser un joint de type Omega.

Des orifices ou perçages 54a et 18c font formés respectivement dans l'élément intermédiaire 54 et la patte amont 18, ces orifices ou perçages permettant le passage d'un flux d'air de refroidissement ou de ventilation.

## Revendications

1. Turbine (1) pour une turbomachine s'étendant selon un axe, comportant un carter (4) annulaire et au moins un étage de turbine (1) comprenant un distributeur (2) et une roue aubagée (5) de rotor entourée d'un anneau d'étanchéité (10) comportant un élément abradable , la roue aubagée (5) et l'anneau d'étanchéité (10) étant situés en aval du distributeur (2), l'anneau d'étanchéité (10) comportant une extrémité amont maintenue sur le carter (4) par l'intermédiaire de moyens de verrouillage (12), **caractérisée en ce qu'**elle comporte un premier joint d'étanchéité (48) élastique en contact d'une part contre les moyens de verrouillage (12) et d'autre part en contact contre le distributeur ou le carter (4) de sorte à plaquer les moyens de verrouillage (12) contre l'anneau d'étanchéité (10), et **en ce que** les moyens de verrouillage comportent une partie radialement externe (12a) de section en forme générale de C et une partie radiale (12b) s'étendant radialement vers l'intérieur depuis la partie externe (12a), ladite turbine (1) comportant un second joint d'étanchéité (49) élastique en contact d'une part contre les moyens de verrouillage (12) et d'autre part en contact contre une face radiale de l'anneau d'étanchéité (10) , les deux joints d'étanchéité (48, 49) prenant appui sur ladite partie radiale (12b), respectivement de part et d'autre de la partie radiale (12b).

2. Turbine (1) selon la revendication 1, **caractérisée en ce que** les deux joints d'étanchéité (48, 49) comportent au moins un joint annulaire (48, 49), déformable axialement.

3. Turbine (1) selon l'une des revendications 1 à 2, **caractérisée en ce que** l'anneau d'étanchéité (10) comporte une partie (52) s'étendant axialement vers l'amont, située au moins en partie en regard des moyens de verrouillage (12) et/ou des deux joints d'étanchéité (48, 49).

4. Turbine (1) selon l'une des revendications 1 à 3, **caractérisée en ce que** l'anneau d'étanchéité (10) est sectorisé et comporte une pluralité de secteurs agencés bout à bout circonférentiellement autour de l'axe, des éléments d'étanchéité (36) s'étendant entre les extrémités des secteurs d'anneau circonférentiellement adjacents.

5. Turbine (1) selon les revendications 4, **caractérisée en ce que** les éléments d'étanchéité (36) sont situés au moins dans ladite partie (52) de l'anneau d'étanchéité (10) s'étendant axialement vers l'amont.

6. Turbine (1) selon l'une des revendications 1 à 5, **caractérisée en ce que** le distributeur (2) comporte une virole radialement externe (16) et une virole radialement interne (15), reliées par des pales radiales (3), la virole externe (16) comportant au moins un rebord aval (21) s'étendant radialement vers l'extérieur depuis la virole externe (16) et monté sur le carter (4), ledit rebord (21) s'étendant axialement, au moins en partie, en regard des moyens de verrouillage (12).

7. Turbine (1) selon l'une des revendications 1 à 5, **caractérisée en ce que** distributeur (2) comporte une virole radialement externe (16) et une virole radialement interne (15) reliées par des pales radiales (3), la virole externe (16) comportant au moins un rebord aval (21) s'étendant radialement vers l'extérieur depuis la virole externe (16) et monté sur le carter (4), l'extrémité radialement externe dudit rebord aval (21) étant située radialement à l'intérieur des moyens de verrouillage (12).

8. Turbine (1) selon l'une des revendications 1 à 7, **caractérisée en ce que** l'anneau d'étanchéité (10) comporte une patte (18) maintenue en appui radial et en appui axial sur une partie (20) du carter (4), par l'intermédiaire des moyens de verrouillage (12).

## Patentansprüche

1. Turbine (1) für ein Turbotriebwerk, das sich entlang einer Achse erstreckt, enthaltend ein ringförmiges Gehäuse (4) und zumindest eine Turbinenstufe (1) mit einer Leitschaufel (2) und einem Rotor-Schaufelrad (5), das von einem Dichtungsring (10) umgeben ist, der ein Verschleißteil umfasst, wobei das Schaufelrad (5) und der Dichtungsring (10) stromabwärts der Leitschaufel (2) angeordnet sind, wobei der Dichtungsring (10) ein stromaufwärts gelegenes Ende aufweist, das mittels Verriegelungsmitteln (12) am Gehäuse (4) gehalten wird, **dadurch gekennzeichnet, dass** sie eine erste elastische Dichtung (48) aufweist, die einerseits an den Verriegelungsmitteln (12) und andererseits an der Leitschaufel oder dem Gehäuse (4) anliegt, so dass die Verriegelungsmittel (12) gegen den Dichtungsring (10) gedrückt werden, und dass die Verriegelungsmittel einen radial äußeren Abschnitt (12a) mit C-förmigem Querschnitt und einen radialen Abschnitt (12b) umfassen, der sich ausgehend von dem äußeren Abschnitt (12a) radial nach innen erstreckt, wobei die Turbine (1) eine zweite elastische Dichtung (49) aufweist, die einerseits an den Verriegelungsmitteln (12) und andererseits an einer radialen Fläche des Dichtungsrings (10) anliegt, wobei sich die beiden Dichtungen (48, 49) beiderseits des radialen Abschnitts (12b) jeweils an dem radialen Abschnitt (12b) abstützen.

2. Turbine (1) nach Anspruch 1,
**dadurch gekennzeichnet, dass** die beiden Dichtungen (48, 49) zumindest eine Ringdichtung (48, 49) umfassen, die axial verformbar ist.

3. Turbine (1) nach einem der Ansprüche 1 bis 2,
**dadurch gekennzeichnet, dass** der Dichtungsring (10) einen sich axial stromaufwärts erstreckenden Abschnitt (52) aufweist, der zumindest teilweise den Verriegelungsmitteln (12, 12a) und/oder den beiden Dichtungen (48, 49) gegenüberliegt.

4. Turbine (1) nach einem der Ansprüche 1 bis 3,
**dadurch gekennzeichnet, dass** der Dichtungsring (10) sektorisiert ausgebildet ist und eine Vielzahl von Sektoren aufweist, die in Umfangsrichtung um die Achse auf Stoß angeordnet sind, wobei sich zwischen den Enden der in Umfangsrichtung benachbarten Ringsektoren Dichtungselemente (36) erstrecken.

5. Turbine (1) nach Anspruch 4,
**dadurch gekennzeichnet, dass** die Dichtungselemente (36) zumindest in dem sich axial stromaufwärts erstreckenden Abschnitt (52) des Dichtungsrings (10) angeordnet sind.

6. Turbine (1) nach einem der Ansprüche 1 bis 5,
**dadurch gekennzeichnet, dass** die Leitschaufel (2) einen radial äußeren Mantelring (16) und einen radial inneren Mantelring (15) aufweist, die durch radial verlaufende Schaufelblätter (3) verbunden sind, wobei der äußere Mantelring (16) zumindest eine stromabwärts gelegene Randleiste (21) aufweist, die sich ausgehend von dem äußeren Mantelring (16) radial nach außen erstreckt und an dem Gehäuse (4) angebracht ist, wobei sich die Randleiste (21) zumindest teilweise den Verriegelungsmitteln (12) gegenüberliegend axial erstreckt.

7. Turbine (1) nach einem der Ansprüche 1 bis 5,
**dadurch gekennzeichnet, dass** die Leitschaufel (2) einen radial äußeren Mantelring (16) und einen radial inneren Mantelring (15) aufweist, die durch radial verlaufende Schaufelblätter (3) verbunden sind, wobei der äußere Mantelring (16) zumindest eine stromabwärts gelegene Randleiste (21) aufweist, die sich ausgehend von dem äußeren Mantelring (16) radial nach außen erstreckt und an dem Gehäuse (4) angebracht ist, wobei das radial äußere Ende der stromabwärts gelegenen Randleiste (21) radial innerhalb der Verriegelungsmittel (12) angeordnet ist.

8. Turbine (1) nach einem der Ansprüche 1 bis 7,
**dadurch gekennzeichnet, dass** der Dichtungsring (10) eine Lasche (18) aufweist, die über die Verriegelungsmittel (12) radial in Anlage und axial in Anlage an einem Abschnitt (20) des Gehäuses (4) gehalten wird.

## Claims

1. Turbine (1) for a turbine engine extending along an axis, including an annular casing (4) and at least one turbine stage (1) comprising a nozzle (2) and a rotor impeller wheel (5) surrounded by a sealing ring (10) including an abradable element, the impeller wheel (5) and the sealing ring (10) being located downstream from the nozzle (2), the sealing ring (10) including an upstream end held on the casing (4) by locking means (12), **characterized in that** it includes a first elastic seal (48) in contact with the locking means (12) as well as with the nozzle or the casing (4) so as to press the locking means (12) against the sealing ring (10), and **in that** the locking means include a radially outer portion (12a) with a generally C-shaped cross-section and a radial portion (12b) extending radially inward from the outer portion (12a), the turbine (1) including a second elastic seal (49) in contact with the locking means (12) and with a radial face of the sealing ring (10), the two seals (48, 49) bearing on said radial portion (12b), respectively on either side of the radial portion (12b).

2. Turbine (1) according to claim 1, **characterized in that** the two seals (48, 49) include at least one axially deformable annular seal (48, 49).

3. Turbine (1) according to one of claims 1 to 2, **characterized in that** the sealing ring (10) includes a portion (52) extending axially in the upstream direction, located at least partially facing the locking means (12) and/or the two seals (48, 49).

4. Turbine (1) according to one of claims 1 to 4, **characterized in that** the sealing ring (10) is sectorized and includes a plurality of sectors arranged end-to-end on the circumference about the axis, sealing elements (36) extending between the ends of the circumferentially adjacent ring sectors.

5. Turbine (1) according to claim 4, **characterized in that** the sealing elements (36) are located at least in said portion (52) of the sealing ring (10) extending axially in the upstream direction.

6. Turbine (1) according to one of claims 1 to 5, **characterized in that** the nozzle (2) includes a radially outer shell (16) and a radially inner shell (15), connected by radial blades (3), the outer shell (16) including at least one downstream edge (21) extending radially outward from the outer shell (16) and mounted on the casing (4), said edge (21) extending axially, at least partially, facing the locking means (12).

7. Turbine (1) according to one of claims 1 to 5, **characterized in that** the nozzle (2) includes a radially outer shell (16) and a radially inner shell (15) connected by radial blades (3), the outer shell (16) including at least one downstream edge (21) extending radially outward from the outer shell (16) and mounted on the casing (4), the radially outer end of said downstream edge (21) being located radially inside the locking means (12).

8. Turbine (1) according to one of claims 1 to 7, **characterized in that** the sealing ring (10) includes a tab (18) held radially bearing and axially bearing on a portion (20) of the casing (4), by the locking means (12).
